# EUROPEAN PATENT SPECIFICATION

(11) **EP 3 152 913 B1**
(45) Date of publication and mention of the grant of the patent: **04.08.2021**
(21) Application number: 14728549.8
(22) Date of filing: 04.06.2014
(51) Int. Cl.: H04N 21/482, H04N 21/45

(54) **DISPLAYING RADIO-TELEVISION PROGRAM QUERY RESULTS ACCORDING TO PRIVACY CRITERION**
ANZEIGEN VON RADIO-TV-PROGRAMM ABFRAGEERGEBNISSE IM RAHMEN DER DATENSCHUTZKRITERIEN
AFFICHAGE DE LA RÉSULTATS D'INTERROGATION DE PROGRAMMES SELON LE CRITÈRE DE CONFIDENTIALITÉ

(43) Date of publication of application: 12.04.2017
(73) Proprietor: Saronikos Trading and Services, Unipessoal Lda, 9000-48 Funchal, Madeira (PT)
(72) Inventor: JAMES, Robert, Hatfield Hertfordshire AL10 8HN (GB)
(74) Representative: Metroconsult Srl
(86) International application number: PCT/EP2014/061601
(87) International publication number: WO 2015/185127

(56) References cited:
- US-A1- 2002 049 804
- US-A1- 2005 278 741
- US-A1- 2009 133 051
- US-B1- 8 634 809
- None

## Description

The present invention relates to a method for generating messages, comprising information about radio-television programs, in reply to a query made by a radio-television apparatus on one or more radio-television program databases and/or on the Internet, as well as to an associated radio-television apparatus and system.

More in particular, the present invention relates to a method, a radio-television apparatus and a system for protecting the privacy of a user of the radio-television apparatus.

As is known, some EPG's ("Electronic Program Guides") allow creating queries to facilitate searching for radio-television programs through some fields of the EPG itself. The EPG then makes the search, organizes the results of the query, and shows them to a user, e.g. in text/graphic form, by displaying a message on a screen.

Nowadays, with the ever increasing number of radio-television contents available via digital terrestrial TV, satellite TV, cable TV and Internet, e.g. IPTV ("Internet Protocol Television"), it is inconceivable for a "user-friendly" system to require the user to examine all of the available EPG platforms offered by service providers in order to check if there is a radio-television program or content of his/her interest. This would be a waste of time, and could also be annoying for the user.

Patent application US 2005/0278741 (US '741), assigned to Microsoft Corporation, discloses an EPG that can create queries to facilitate making simple and/or complex searches for radio-television programming information. In particular, the solution disclosed in said patent application solves the problem of navigating through a large number of platforms and contents, on condition that the television receiver can take a query about a certain content. If such content is not available at the time of the query, or if it does not become available in the future within a predetermined time, the method of US '741 allows the query to continue searching through all the different EPG's, even in background (i.e. when the television apparatus is in standby mode or is displaying other programs). Once the television content matching the user's query is found, it is made available for display and/or recording.

However, said document US '741 has a drawback. Because the query can be made days, or even months, before the desired content is actually available, when it finally becomes available it may happen that the user of the television receiver is no longer the same as the one that made the original query, e.g. a child instead of an adult person. Therefore, it may occur that the child is watches an inappropriate television content.

Another drawback is that EPG information privacy or protection is not ensured when the television receiver is regularly used by a plurality of users.

US Patent Application US 2002/049804 discloses a reminding system where the user who made the query for a particular TV program needs to insert authentication information to be able to access the program.

It is therefore one object of the present invention to provide a method for generating messages, comprising information about radio-television programs, in reply to a query made by a radio-television apparatus on one or more radio-television program databases and/or on the Internet, as well as to an associated radio-television apparatus and system, wherein a user's privacy is ensured.

This and other objects of the invention are achieved through a method for generating messages, comprising information about radio-television programs, in reply to a query made by a radio-television apparatus on one or more radio-television program databases and/or on the Internet, as well as to an associated radio-television apparatus and system, as claimed in the appended claims, which are an integral part of the present description.

In brief, a method is described for generating messages, comprising information about radio-television programs, in reply to a query made by a radio-television apparatus on one or more radio-television program databases and/or on the Internet, wherein the messages are issued on the basis of a privacy criterion that requires at least the verification of a user's credentials. Furthermore, aiming at protecting the user's privacy, the messages may include contents that may vary according to the user's privacy criterion.

In accordance with the present invention, the privacy criterion requires at least the verification of a user's credentials, and may optionally take into account other parameters as well, including a category that the user belongs to, a category of a radio-television content, a protection level, a radio-television apparatus in use, the instant or time of day when the query was started, also referred to as query start time (Tq), the instant or time of day when a radio-television content is available, also referred to as content availability time (Tc), and the time available for the reply message (Tm).

The present invention also relates to a radio-television apparatus adapted to implement the method according to the present invention, wherein said radio-television apparatus may be a terrestrial radio-television receiver, an HbbTV, a Smart TV, a digital radio, a satellite receiver, a set-top box (STB), a tablet, a personal computer, a smartphone, a notebook, or the like.

It is important to specify that the present invention is not limited to radio-television apparatuses capable of executing both steps of making a query and providing the reply (message), since it is also applicable to multiple radio-television apparatuses, each one capable of executing only one of said steps. Therefore, the invention also relates to a system, or network, made up of multiple radio-television apparatuses, wherein each one of the radio-television apparatuses executes the step of making a query or providing the reply (message) to the query, aiming at protecting a user's privacy.

The present invention further relates to a computer product which can be loaded into a memory of said radio-television apparatus, and which is adapted to implement the method according to the present invention.

Further features of the invention are set out in the appended claims, which are intended to be an integral part of the present description.

The above objects will become more apparent from the following detailed description of a method for generating messages, comprising information about radio-television programs, in reply to a query made by a radio-television apparatus on one or more radio-television program databases and/or on the Internet, as well as to an associated radio-television apparatus and system, in accordance with the present invention, with particular reference to the annexed drawings, wherein:
- Figure 1 shows a radio-television apparatus according to the present invention;
- Figure 2 illustrates a system in accordance with the present invention;
- Figure 3 shows a first flow chart of an example of embodiment of the method according to the present invention;
- Figure 4 shows a second flow chart of an example of embodiment of the method according to the present invention;
- Figure 5 shows a third flow chart of an example of embodiment of the method according to the present invention;
- Figure 6 shows a fourth flow chart of an example of embodiment of the method according to the present invention;
- Figure 7 shows a fifth flow chart of an example of embodiment of the method according to the present invention.

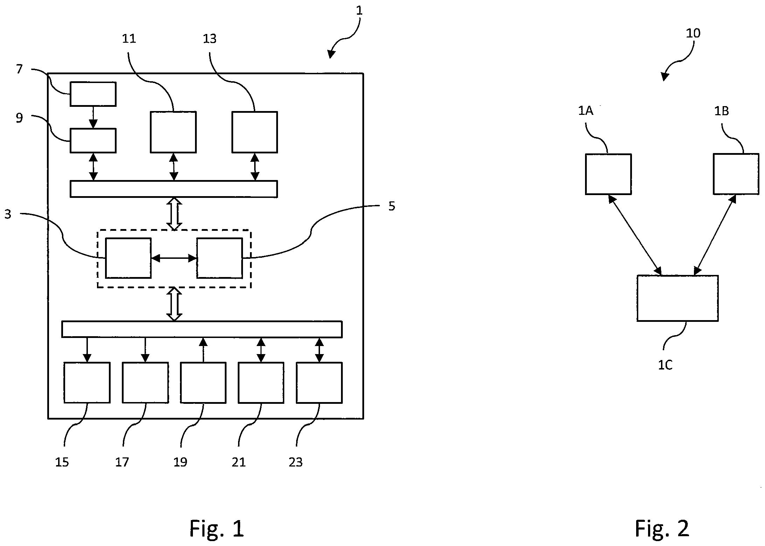

With reference to Fig. 1, there is shown a radio-television apparatus 1 according to the present invention, which is adapted to implement the method that will be described in detail below.

The apparatus 1 is an electronic device adapted to receive radio-television signals (over the air or over the Internet), to process them, and to reproduce them, in particular it is a terrestrial radio-television receiver, an HbbTV, a Smart TV, a digital radio, a satellite receiver, a set-top box (STB), a tablet, a personal computer, a smartphone, a notebook, or the like.

The apparatus 1 comprises a processor 3 associable with memory means 5, a tuner 7 connectable to a demodulator/decoder 9, an EPG radio-television program database 11, and one or more interfaces 13, all of which can communicate with the processor 3 and with the memory means 5.

The EPG database 11 is adapted to comprise all programming information of one or more EPG's received by the apparatus 1. Said EPG database 11 is the base whereon queries for radio-television programs or contents are made. Moreover, multiple tuners may coexist, e.g. for receiving satellite radio-television signals as well.

Preferably, the apparatus 1 also comprises display means 15, in particular a screen, and acoustic means 17, e.g. loudspeakers. Alternatively, said display means 15 and acoustic means 17 may be external to the apparatus 1, but connectable thereto.

The apparatus 1 further comprises a receiver module 19 for receiving control signals, e.g. issued by a common remote control or keyboard, and an Internet interface 21 adapted to receive radio-television signals through the Internet network, e.g. IPTV signals, or "streaming video" signals in general. The apparatus 1 can thus search for radio-television programs also on the Internet or, in addition, on external EPG databases, e.g. residing on remote servers accessible via the Internet network.

The apparatus 1 preferably also comprises a face/voice/gesture recognition device 23 adapted to recognize a user's face by means of a video camera (not shown in the drawings), e.g. the "Kinect" module by Microsoft XBOX, as well as to detect gestures, i.e. commands, made by the user. Furthermore, the face/voice/gesture recognition device 23 can also recognize a user's voice, and hence can be used for issuing commands to the apparatus 1.

With reference to Fig. 2, the present invention also relates to a system 10 comprising two or more apparatuses 1 as previously described. In the example of Fig. 2 a first apparatus 1A and a second apparatus IB are shown, which are two television sets that are both connected to a third apparatus 1C, which in this case is a STB capable of receiving radio-television signals as well as EPG radio-television program signals. The first apparatus 1A and the second apparatus 1B are connected to the third apparatus 1C via a wired or wireless connection, e.g. an HDMI ("High Definition Multimedia Interface") cable, a Wi-Fi ("Wireless Fidelity") connection, or the like. The operation of the system 10 will be made clear below with reference to the method according to the invention.

As for the apparatus 1, it is configured for implementing the method for generating messages, comprising information about radio-television programs, in reply to a query made by a radio-television apparatus 1 on one or more radio-television program databases 11 and/or on the Internet in accordance with the present invention.

Queries may be entered by the user through a dedicated menu of the apparatus 1, or they may be made automatically by the apparatus 1 itself based on the users' television preferences. In this latter case, the apparatus 1 comprises also an algorithm that resides in the memory means 5 and can learn the users' preferences during the normal use of the apparatus 1.

Therefore, the apparatus 1 can start and execute a certain user's query, e.g. on the EPG database 11, and return a message comprising the reply to that query, while at the same time respecting the user's privacy. This means that the returned message is issued on the basis of a privacy criterion that requires at least the verification of the user's credentials. If the apparatus 1 does not make such verification, then the message will not be issued, thus respecting the user's privacy.

The user's credentials preferably comprise a username and a password that can be set by the user him/herself through a dedicated menu of the apparatus 1. Other types of user's credentials are also available and possible. For example, the user's credentials may be those used on a social network; in this case, the user will have to log into the apparatus 1 by using the credentials of the social network, and the apparatus 1 will then connect to the database of the social network through the Internet in order to verify the entered data. Also, the user's credentials may comprise the recognition of the face of a user sitting in front of a video camera, or the recognition of gestures made or voice messages uttered by the user and learnt by the apparatus 1 through the face/voice/gesture recognition device 23.

When the recognition of a user's face takes place (i.e. there is only one viewer who is physically present in front of the apparatus 1), the apparatus 1 will only issue the query reply message after having verified the user's identity, i.e. by scanning his/her face, and after having verified that he/she is alone.

As an alternative, the apparatus 1 will detect a gesture and/or a voice signal in order to recognize the user and determine whether or not the query reply message can be issued, or if the content of said message has to be changed. Anyway, if the user that started the query is not currently sitting in front of the apparatus 1, then the message in reply to the query will not be issued, thus respecting the privacy of the absent user.

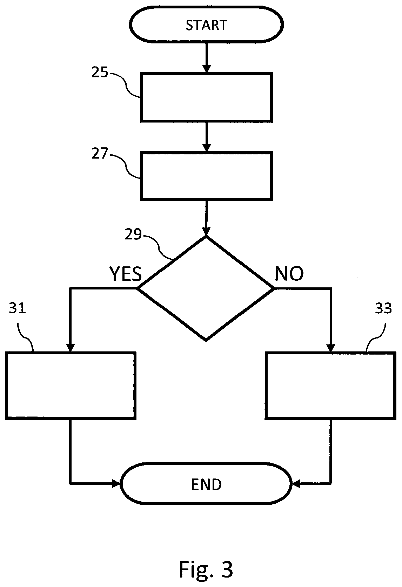

With reference to Fig. 3, there is shown a first flow chart of the method according to the present invention.

At step 25, the user logs into the apparatus 1 (by entering his/her username and password, or via face/voice/gesture recognition) and makes a query, i.e. an interrogation, through the apparatus 1, on one or more EPG databases 11 and/or on the Internet to search for a radio-television program or content X. Or, instead of logging in right away, the user may be requested by the apparatus 1 to enter his/her credentials (by entering his/her username and password or via face/voice/gesture recognition) when he/she makes a query, which credentials will then be associated with the query, so that the request for the content X will be univocally associated with a user.

At step 27, the apparatus 1 has found the content X, e.g. on the EPG of digital terrestrial television.

At step 29, the method provides for verifying the user's credentials; in particular, the screen of the apparatus 1 may display a reply message like the following: "A radio-television content is available for user Y. Please enter your credentials". In this case, the user will enter his/her credentials (by entering his/her username and password or via face/voice/gesture recognition), and the apparatus 1 will compare them with those previously entered when the user logged into the apparatus 1 or when the query was made (step 25).

If the credentials are verified, at step 31 the apparatus 1 will display a message comprising the title of the content X and the start date and time, if available. For example, the message may look like this: "Content X available on 10th May 2014 at 21.00". Optionally, the messages may be issued by the apparatus 1 as voice messages emitted by the acoustic means 17.

If the credentials are not verified, then at step 33 the apparatus 1 will not issue any message, or it will issue a message indicating that the credentials have not been verified.

In order to further improve the level of user privacy, the apparatus 1 will not communicate any message to the user even in the presence of a positive reply to a query, if that specific user that made the query is not recognized first. In other words, according to the method of the invention no message will be issued if a user's credentials, whatever they are, have not been verified first by the apparatus 1. This mode of operation has the advantage of preventing the message indicating the availability of a positive reply to the query from being displayed when a specific user is using the apparatus 1 in the company of other users. In this manner, the user's privacy is improved because, thanks to this mode of operation, he/she will not be asked by the remaining group of users to examine, together with him/her, the reply to the query. According to this mode of operation, the user will have the possibility, as desired, to check if there is a positive reply to one of his/her queries when he/she is alone or in the company of a group of selected users, by logging in with his/her credentials to see if there are any messages, in particular positive replies to his/her queries, which he/she can then utilize.

The way in which the credentials are used may be subject to many variations and combinations; for example, the user may associate his/her username and password with the query that he/she wants to make (step 25) and, upon verification (step 29), the apparatus 1 may utilize the face/voice/gesture recognition function to actually verify the presence of the correct user only, who is sitting in front of the apparatus 1. This prevents a situation from occurring wherein a first user steals a second user's username and password; for example, when a son steals his father's credentials and wants to read the messages relating to the queries associated with his father.

It is apparent that this first example of the method according to the present invention safeguards the user's privacy as regards the visualization or acoustic reproduction of radio-television contents searched for by him/her.

Optionally, the privacy criterion may also take into account other parameters associated with at least one user of a plurality of users. For example, if there is only one associated parameter, then the privacy level of the message will be relatively low; on the contrary, if there are six parameters associated with the user, then the privacy level of the message will be higher. The privacy level of the message also depends on the type of parameter that the user intends to associate with him/herself, i.e. with the messages directed to him/her. Therefore, many options are available for configuring the privacy level of a message.

Through the apparatus 1, the user can be enabled to reply to the messages; in fact, the messages may be either statements or questions made to the user in an effort to protect his/her privacy. The user can thus reply to the messages by issuing commands through a remote control or a keyboard or a touch screen or the face/voice/gesture recognition device 23. It is clear that the user's replies to the messages are also dependent on the parameter(s) chosen to protect the user's privacy.

The parameters that can be correlated to the user may include:
- a user category;
- a protection level;
- a radio-television apparatus 1 being used by the user for making the query and/or for the reply to the query;
- a query start time Tq, i.e. the instant at which the query starts on the EPG database 11 and/or on the Internet;
- a content availability time Tc concerning a radio-television content matching the query, i.e. the instant (e.g. date and time) when the radio-television content is available in the EPG schedule;
- a message time Tm, i.e. the instant or period of time when the message addressed to the user is displayed; in general, the following formula applies: Tm ≤Tc-Tq, since the message can be issued between the query start time Tq and the radio-television content availability time Tc;
- a category of the radio-television content matching the query;
- a login status of a user on the radio-television apparatus 1 and/or on a social network accessible through the apparatus 1.

More in detail, the user category defines different users or groups of users that may use the apparatus 1. A group of users may include, for example, at least two different members of a family, i.e. husband and wife, father and child, or husband, wife and child, or the like. The user category can be defined by a user through a dedicated menu of the apparatus 1. The user category can also be created by joining several users having one same characteristic or piece of information derived from user profiles residing in the apparatus 1 or on a social network telematically accessible through the apparatus 1. For example, a user category may be created which includes all users having the same user ID, or the same image in their user profile, or the same bank account, and so on.

The protection level is used for defining the query and/or the reply thereto, which affects the availability and/or visualization of a content searched for by the query. The protection level can preferably be set to low, medium and high. For example, a low protection level will allow a first user to start a query even if a second user has logged into the apparatus 1 or a different user category is in use. Therefore, the protection level is useful as an immediate way of making a query while protecting the information pertaining thereto. For example, a query can be started by adding user identification information and/or a password even if someone else is also connected to the apparatus 1, so that the latter will automatically assign the query, and the corresponding reply message, to the correct user. In this case, the apparatus 1 will not provide a reply until the user's privacy is ensured.

The parameter about the radio-television apparatus 1 used by the user for making the query and/or for the reply to the query allows the reply messages to be correctly addressed to the apparatus 1 being used by the user, as opposed to another apparatus 1.

Still with reference to Fig. 2, this parameter is useful in the condition of the previously described system 10, wherein the user makes an EPG search query on the third apparatus 1C (STB) while he/she is using the first apparatus 1A (in this case, the apparatus 1A is operating as a simple screen receiving a video signal and an audio signal from the STB 1C). In this situation, the method according to the invention will display the messages on the first apparatus 1A, not on the second apparatus IB. Such a situation is very common, because a configuration could be possible wherein the apparatus 1A is in the bedroom (apparatus being used by the user) and the apparatus 1B is in the living room, and is perhaps being used by another user. In this manner, the messages will respect the user's privacy. In other words, the STB (1C) will return the reply (message) containing the requested program information (query) to the television set (1A) from which the query was made.

The query start time Tq, i.e. the instant at which the query starts on the EPG database 11 and/or on the Internet, can be used automatically in order to determine the message time Tm, which may be either a time instant or a period of time.

The availability time Tc of a radio-television content matching the query is used for determining the message time Tm because some specific contents are only available in a specific part of the day, e.g. crime-based contents, erotic contents, or contents which are generally unsuitable for minors.

For example, if the content (movie, music or documentary film) can only be displayed after 22.00 (data obtained from an EPG database 11), then the apparatus 1 will take such information into account to send to the user a short message between 21.00 and 22:00. This function can also be used for queries relating to children's contents, so as to avoid that the message time Tm might be later than a certain time slot, in particular the time slot within which radio-television stations broadcast programs suitable for minors (the so-called pre-watershed time).

Furthermore, the radio-television content availability time Tc can be set manually beforehand, whether by setting a specific time instant or by setting a time slot, which at any rate will have to be later than the query start time Tq.

As aforementioned, the message time Tm is the instant or period of time when the message addressed to the user is displayed; in general, the following formula applies: Tm ≤Tc-Tq.

The category of the radio-television content matching the query may be, for example, one of the following: sports, documentary, erotic, news, crime, children's programs, and so on. The content's category may be derived from the EPG itself. This parameter can affect the emission of the message. For example, if the content's category is erotic, then the contents searched for by a minor user profile will not be displayed, and the sole verification of the credentials will not be sufficient to issue the query reply messages. It is obvious that the content category parameter, just like the other parameters described herein, is a further constraint, in addition to the credentials, that can be added into the privacy criterion of a user profile stored in the memory 5 of the apparatus 1. Therefore, each user may optionally customize his/her own privacy criterion; in addition, a master profile, e.g. the father, may be enabled to modify a child's user profile.

The privacy criterion may also depend on a user's login status on the radio-television apparatus 1 and/or on a social network accessible through the apparatus 1. As aforesaid, when executing a query (step 25 of Fig. 2), the user's credentials must be associated with the query; this may occur when the user logs into the apparatus 1 or via the credentials of a social network.

According to a further aspect of the present invention, the message may be avoided or delayed depending on whether the conditions dictated by one or more of the above-described parameters occur or not. Also, the message may be displayed with different levels of information about the query, e.g.: "The result of a query is available", "The result of a query X is available", "Content Y is available today at Z", "The result of a query is available, please enter your credentials:", "The result of a query by user U is available", and so on.

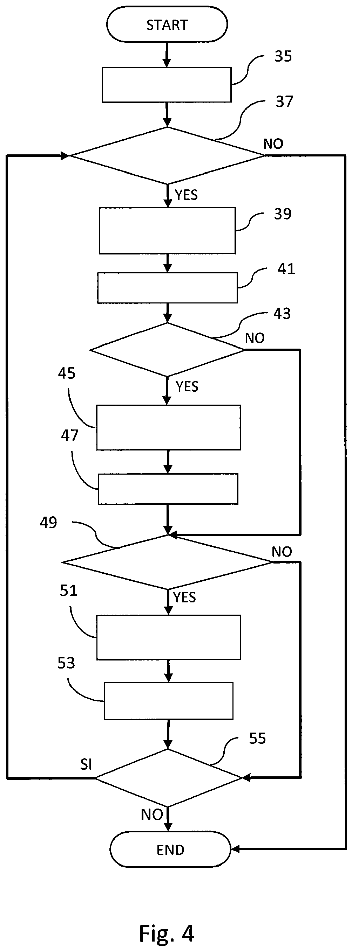

With reference to Fig. 4, there is shown a flow chart of the user registration process.

After the start of the chart, at step 35 the user data registration process begins; at the next step 37, it is asked whether a new user profile, or account, is to be registered: if so, at step 39 the credentials must be entered, e.g. username and password, which will then be stored into the memory means 5 at step 41, followed by step 43; otherwise, the user registration process will end. As aforesaid, the credentials also include the face/voice/gesture recognition; in this case, therefore, at step 39 the apparatus 1 will automatically acquire the user's face or voice or gesture data.

At step 43, the user is asked if he/she wants to define the user category: if so, at step 45 the category "Wife-Husband" will be set in this example, and such category will be registered into the memory means 5 at step 47, which will then be followed by step 49; otherwise, the process will go directly to step 49.

At step 49, the user is asked if he/she wants to enter the degree of relationship into his/her own profile: if so, at step 51 the degree of relationship "Father" will be set in this example, and such information will be registered into the memory means 5 at step 53, which will then be followed by step 55; otherwise, the process will go directly to step 55.

At step 55, the user is asked if he/she wants to repeat the user registration process: if so, the process will go back to step 37 for entering a new user; otherwise, the registration process will end.

It is clear that much other user profile information may be requested and stored, e.g. sex, age, profession, and so on. As an alternative, one can gain access to the apparatus 1 by entering an account of a social network, so that the apparatus 1 can use all information retrieved from the social network's database and possibly store such information into the memory means 5, thus automatically creating the user profile.

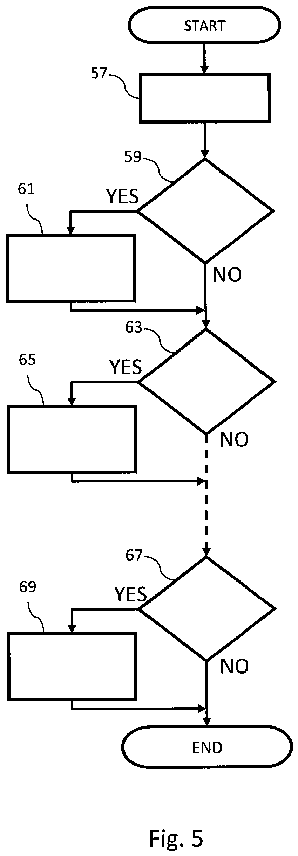

With reference to Fig. 5, there is shown a flow chart relating to the choice of the privacy criterion to be associated with a user profile.

The choice of the privacy criterion can be made at step 57, both when modifying the privacy criterion associated with the user profile (permanent mode, but still modifiable by the user) and when defining a query (temporary mode, applied only to the query that the user is making at a certain time instant).

If the user is defining a query, at step 59 the user will be asked if he/she wants to enter an account: if not, step 63 will be carried out; if yes, at step 61 the user will have to enter his/her credentials.

If the user is choosing the privacy criterion to be associated with his/her own profile, then step 59 will not be carried out and the process will go directly to step 61.

At step 63, the user is asked if he/she wants to associate one of the above-mentioned parameters with his/her own profile or query privacy criterion: if so, at step 65 the user will associate a parameter (e.g. the category of the radio-television content), and step 67 will then be carried out; otherwise, the process will go directly to step 67.

At step 67, the user is asked if he/she wants to associate another of the above-mentioned parameters with his/her own profile or query privacy criterion: if so, at step 69 the user will associate another parameter (e.g. the protection level), and the process will be complete; otherwise, the process will go directly to the end.

The example of Fig. 5 takes into account only two parameters to be associated with a user's privacy criterion. Of course, a user may associate any combination of parameters, or even all of them. Anyway, the privacy criterion requires at least the verification of a user's credentials. All other parameters can be easily added to increase and improve the protection of a user's privacy when there are messages pertaining to radio-television programming.

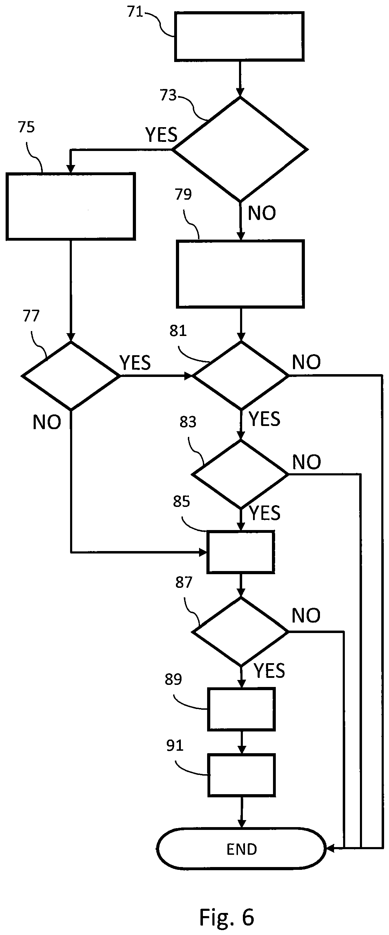

With reference to Fig. 6, there is shown an example of a flow chart of the method according to the present invention when a radio-television content Y is available for the user Ul, in the case wherein he/she has previously set the privacy criterion with the parameters of the protection level and of the user category "Wife-Husband".

At step 71, the content Y is available for the user U1, who in this case is supposed to have started the query by specifying the protection level and the user category "Wife-Husband". This leads to step 73, wherein it is verified if the protection level is "High": if so ("High" protection), at step 75 only the following information will be displayed: "A content is available for user Ul", leading to step 77, wherein it will be checked if any other viewers are also present; otherwise ("Low" protection), the process will go to step 79, wherein the following information will be displayed: "Content Y is available for user Ul", in turn leading to step 81. It is important to underline that, with "High" protection, the name of the radio-television content Y will not be displayed or emitted by the apparatus 1.

If the answer at step 77 is no (condition wherein no other viewers are present), the process will go directly to step 85; otherwise, if the answer is yes (other viewers are present), step 81 will be carried out.

At step 81, it is checked if any minors are present: if the answer is yes, the process will end without displaying anything, thus ensuring minor protection; if the answer is no (there are no minors present), step 83 will be carried out, wherein the user will be asked permission to continue: if the answer is no, the process will end without displaying anything, thus ensuring privacy protection; otherwise, if the answer is yes, step 85 will be carried out.

At step 85, complete information is displayed: "Content Y is available for user Ul", leading to step 87, wherein the user will be asked for a confirmation to display that content right away: if the answer is no, the process will end; if the answer is yes, then step 89 will be carried out, wherein the user will be asked to enter his/her credentials.

Finally, after having verified the credentials, at step 91 the process will activate the visualization of the requested content Y, thus ensuring protection of the privacy of the user Ul that started the query.

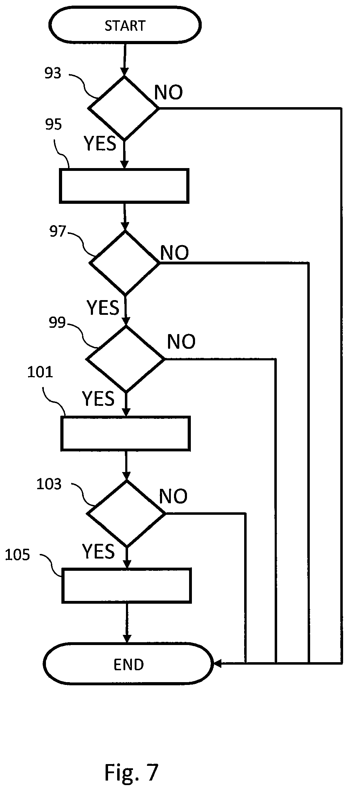

With reference to Fig. 7, there is shown a flow chart of an example of the method according to the present invention, pertaining to the case wherein the privacy criterion requires control of the parameter of the radio-television apparatus 1 being used by the user for the making the query and/or for the reply to the query (message).

At step 93, the process checks if there are any incoming messages: if the answer is yes, at the next step 95 the following information will be displayed: "A message is available for user Ul on TV set no. 2", and, at step 97, the user will be asked permission to continue; if the answer is no, the process will end.

At step 97, the user is asked if he/she wants to continue: if the answer is yes, step 99 will be carried out; if the answer is no, the process will end.

At step 99, the user is asked if the apparatus 1 in use is the TV set no. 2: if the answer is yes, the user will be asked to enter his/her credentials at step 101, followed by step 103; if the answer is no, the process will end.

At step 103, the user is asked if he/she wants to receive the content Y right away: if the answer is no, the process will end; if the answer is yes, step 105 will be carried out, wherein the content Y will be displayed on the TV set no. 2 as requested, thus ensuring protection of the privacy of the user that started the query; the process will thus be complete.

The method according to the invention can be implemented by means of a computer product which can be loaded into the memory means 5 of the apparatus 1, and which comprises software code portions adapted to implement said method.

The features of the present invention, as well as the advantages thereof, are apparent from the above description.

A first advantage of the method, apparatus and system according to the present invention is that a user's privacy is ensured as regards the programming information of a radio-television apparatus.

A second advantage of the method, apparatus and system according to the present invention is that the privacy criterion can be configured according to the user's preferences.

A third advantage of the method, apparatus and system according to the present invention is that the privacy criterion can be automatically configured by means of a face/voice/gesture recognition device.

A further advantage of the method, apparatus and system according to the present invention is that the user can rest assured that, even in the presence of a positive reply to his/her query, the message relating to the existence of such positive reply will not be shown if the user that made the query has not first identified him/herself through his/her credentials.

## Claims

1. A method for generating messages, comprising information about radio-television programs, in reply to a query related to a specific radio-television program or content (X) made by a user of a radio-television apparatus (1) on one or more radio-television program databases (11) and/or on the Internet, said messages being adapted to be issued by said radio-television apparatus (1), said messages being issued on the basis of a user's privacy criterion, said privacy criterion requiring at least the verification of a user's credentials, wherein said radio-television apparatus (1) performs the following steps:
a) obtaining user's credentials of the user making said query;
b) univocally associating said query to said user's credentials obtained at step a);
c) searching said one or more radio-television program databases (11) and/or on the Internet for said specific radio-television program or content (X);
d) finding said specific radio-television program or content (X);
e) preventing issuing any message by said radio-television apparatus (1) in relation to the result of said query before obtaining the user's credentials of the user having made said query;
f) obtaining credentials of a user using said radio-television apparatus (1);
g) upon verification of said credentials obtained at step f) as belonging to the user having made said query, issuing a message indicating that said specific radio-television program or content (X) is available.

2. Method according to claim 1, wherein said radio-television apparatus (1) issues a further message comprising the title, the start date and time of said specific radio-television program or content (X).

3. Method according to claim 1, wherein said credentials obtained at step a) are of a different type than said credentials obtained at step e).

4. A method according to one or more of the preceding claims, wherein said privacy criterion depends on one or more parameters comprised in the group including: a user category, a protection level adopted by said radio-television apparatus (1) being used by the user for making the query and/or for the reply to said query, a parameter about the radio-television apparatus (1) being used by the user for making the query and/or for the reply to said query, a query start time Tq, a radio-television content availability time Tc, a message time Tm, a category of the radio-television content matching the query, and a login status of a user on said radio-television apparatus (1) and/or on a social network accessible through said radio-television apparatus (1).

5. A method according to one or more of the preceding claims, wherein said privacy criterion is associable with a user profile stored in memory means (5) of said radio-television apparatus (1).

6. A method according to one or more of the preceding claims, wherein said privacy criterion can be configured while making said query and/or while configuring said user profile.

7. A method according to one or more of the preceding claims, wherein said credentials are a username and password pair.

8. A method according to one or more of the preceding claims, wherein said credentials are the user's face/voice/gesture recognition information.

9. A radio-television apparatus (1) for generating messages, comprising information about radio-television programs, in reply to a query related to a specific radio-television program or content (X) made by a user on one or more radio-television program databases (11) and/or on the Internet, said apparatus (1) being configured for implementing the method according to one or more of claims 1 to 8.

10. A radio-television apparatus (1) according to claim 9, said radio-television apparatus (1) comprising a face/voice/gesture recognition device (23) adapted to recognize a user's face through a video camera, detect a user's gestures, and recognize a user's voice, and being able to use said user's face/voice/gesture recognition information in order to execute commands in said radio-television apparatus (1).

11. A system (10) for generating messages, comprising information about radio- television programs, in reply to a query related to a specific radio-television program or content (X) made by a user on one or more radio-television program databases (11) and/or on the Internet, said system (10) comprising at least two radio-television apparatuses (1) in accordance with claim 9 or 10.

12. A computer product which can be loaded into memory means (5) associable with said radio/television apparatus (1), and which comprises portions of software code adapted to implement the method according to one or more of claims 1 to 8.

## Patentansprüche

1. Verfahren zum Erzeugen von Nachrichten, die Informationen über Radio-Fernsehprogramme umfassen, als Antwort auf eine Anfrage in Bezug auf ein bestimmtes Radio-Fernsehprogramm oder einen Inhalt (X), die von einem Benutzer eines Radio-Fernsehgeräts (1) in einer oder mehreren Radio-Fernsehprogrammdatenbanken (11) und/oder im Internet gestellt wurde, wobei die Nachrichten angepasst ist, von dem Radio-Fernsehgerät (1) ausgegeben zu werden, wobei die Nachrichten werden auf der Grundlage eines Datenschutzkriteriums eines Benutzers ausgegeben, wobei das Datenschutzkriterium mindestens die Überprüfung der Berechtigungsnachweise eines Benutzers erfordert, wobei das Radio-Fernsehgeräts (1) folgende Schritte ausführt:
a) Erhalten der Benutzerberechtigungsnachweise des Benutzers, der die Anfrage stellt;
b) eindeutiges Zuweisen der Anfrage zu dem Benutzerberechtigungsnachweise, die im Schritt a) erhalten wurden;
c) Suchen in dem einen oder mehreren Radio-Fernsehprogrammdatenbanken (11) und/oder im Internet nach dem bestimmen Radio-Fernsehprogramm oder dem Inhalt (X);
d) Finden des bestimmten Radio-Fernsehprogramms oder Inhalts (X);
e) Verhindern des Ausgebens jeglicher Nachrichten durch das Radio-Fernsehgeräts (1) in Bezug auf das Ergebnis der Anfrage vor dem Erhalten des Berechtigungsnachweises des Benutzers, der die Anfrage gestellt hat;
f) Erhalten von Berechtigungsnachweisen eines Benutzers, der das Radio-Fernsehgerät (1) benutzt;
g) nach Verifizieren des im Schritt f) erhaltenen Berechtigungsnachweise als zugehörig zu dem Benutzer, der die Anfrage gestellt hat, das Ausgeben einer Nachricht anzeigend, dass das bestimmte Radio-Fernsehprogramm oder der Inhalt (X) erhältlich ist;

2. Verfahren nach Anspruch 1, wobei das Radio-Fernsehgerät (1) eine weitere Nachricht ausgibt, die den Titel, das Startdatum und die Startzeit des bestimmten Radio-Fernsehprogramms oder des Inhalts (X) beinhaltet.

3. Verfahren nach Anspruch 1, wobei die im Schritt a) erhaltenen Berechtigungsnachweise sind von einem anderen Typ als die im Schritt e) erhaltenen Berechtigungsnachweise.

4. Verfahren nach einem oder mehreren der vorherigen Ansprüche, wobei das Datenschutzkriterium abhängig ist von einem oder mehreren Parametern, die umfasst sind in der Gruppe einschließlich: eine Benutzerkategorie, ein Schutzniveau angenommen durch das Radio-Fernsehgerät (1), das von dem Benutzer zum Stellen der Anfrage und/oder zum Beantworten der Anfrage , ein Parameter über das Radio-Fernsehgerät (1), das von dem Benutzer benutzt wurde zum Erstellen der Anfrage und/oder zum Beantworten der Anfrage, eine Anfragestartzeit Tq, eine Radio-Fernsehinhaltverfügbarkeitszeit Tc, eine Nachrichtzeit Tm, eine Kategorie des Radio-Fernsehinhalts passend zu der Anfrage, und ein Login-Status eines Benutzers auf dem Radio-Fernsehgerät (1) und/oder ein Sozialnetzwerk, das durch das Radio-Fernsehgerät (1) zugänglich ist.

5. Verfahren nach einem oder mehreren der vorherigen Ansprüche, wobei das Datenschutzkriterium einem Benutzerprofil zuordenbar ist, das in einer Speichereinrichtung (5) des Radio-Fernsehgeräts (1) gespeichert ist.

6. Verfahren nach einem oder mehreren der vorherigen Ansprüche, wobei das Datenschutzkriterium konfiguriert werden kann, während die Anfrage durchgeführt wird und/oder während das Benutzerprofil konfiguriert wird.

7. Verfahren nach einem oder mehreren der vorherigen Ansprüche, wobei die Berechtigungsnachweise ein Paar aus Benutzername und Passwort sind.

8. Verfahren nach einem oder mehreren der vorherigen Ansprüche, wobei die Berechtigungsnachweise Gesichts-/Sprach-/Gestenerkennungsinformationen des Benutzers sind.

9. Radio-Fernsehgerät (1) zum Erzeugen von Nachrichten, die Informationen über Radio-Fernsehprogramme umfassen, als Antwort auf eine Anfrage in Bezug auf ein bestimmtes Radio-Fernsehprogramm oder einen bestimmten Inhalt (X), die von einem Benutzer eines Radio-Fernsehgeräts (1) in einer oder mehreren Radio-Fernsehprogrammdatenbanken (11) und/oder im Internet gestellt wird, wobei das Gerät (1) zur Durchführung des Verfahrens nach einem oder mehreren der Ansprüche 1 bis 8 konfiguriert ist.

10. Radio-Fernsehgerät (1) nach Anspruch 9, wobei das Radio-Fernsehgerät (1) eine Gesichts-/Sprach-/Gesten-Erkennungsvorrichtung (23) umfasst, die angepasst ist, um das Gesicht eines Benutzers durch eine Videokamera zu erkennen, die Gesten eines Benutzers zu erkennen, und die Stimme eines Benutzers erkennen und in der Lage sein, die Gesichts-/Sprach-/Gestenerkennungsinformationen des Benutzers zu verwenden, um Befehle in dem Radio-Fernsehgerät (1) auszuführen.

11. System (10) zum Erzeugen von Nachrichten, die Informationen über Radio-Fernsehprogramme umfassen, als Antwort auf eine Anfrage in Bezug auf ein bestimmtes Radio-Fernsehprogramm oder einen bestimmten Inhalt (X), die von einem Benutzer eines Radio-Fernsehgeräts (1) in einer oder mehreren Radio-Fernsehprogrammdatenbanken (11) und/oder im Internet gestellt wird, wobei das System (10) umfasst mindestens zwei Rundfunk- und Fernsehgeräte (1) nach Anspruch 9 oder 10.

12. Computerprodukt, das in Speichermittel (5) geladen werden kann, die dem Radio-/Fernsehgerät (1) zuordenbar ist, und das Teile von Softwarecode umfasst, die angepasst sind, um das Verfahren nach einem oder mehreren der Ansprüche 1 bis 8 zu implementieren.

## Revendications

1. Procédé pour générer des messages, comprenant des informations concernant des programmes de radio-télévision, en réponse à une requête liée à un programme ou un contenu de radio-télévision spécifique (X) réalisée par un utilisateur d'un appareil de radio-télévision (1) sur une ou plusieurs bases de données de programme de radio-télévision (11) et/ou sur l'Internet, lesdits messages étant adaptés pour être émis par ledit appareil de radio-télévision (1), lesdits messages étant émis sur la base d'un critère de confidentialité d'un utilisateur, ledit critère de confidentialité exigeant au moins la vérification des justificatifs d'identité d'un utilisateur, dans lequel ledit appareil de radio-télévision (1) réalise les étapes suivantes :
a) l'obtention des justificatifs d'identité de l'utilisateur réalisant ladite requête ;
b) l'association univoque de ladite requête auxdits justificatifs d'identité de l'utilisateur obtenus à l'étape a) ;
c) la recherche dans lesdites une ou plusieurs bases de données de programme (11) de radio-télévision et/ou sur l'Internet dudit programme ou contenu de radio-télévision spécifique (X) ;
d) la découverte dudit programme ou contenu de radio-télévision spécifique (X) ;
e) la prévention d'émission de tout message par ledit appareil de radio-télévision (1) en lien avec le résultat de ladite requête avant l'obtention des justificatifs d'identité de l'utilisateur ayant réalisé ladite requête ;
f) l'obtention de justificatifs d'identité d'un utilisateur utilisant ledit appareil de radio-télévision (1) ;
g) lors de la vérification desdits justificatifs d'identité obtenus à l'étape f) comme appartenant à l'utilisateur ayant réalisé ladite requête, l'émission d'un message indiquant que ledit programme ou contenu de radio-télévision spécifique (X) est disponible.

2. Un procédé selon la revendication 1, dans lequel ledit appareil de radio-télévision (1) émet un message supplémentaire comprenant le titre, la date et l'heure de début dudit programme ou contenu de radio-télévision spécifique (X).

3. Procédé selon la revendication 1, dans lequel lesdits justificatifs d'identité obtenus à l'étape a) sont d'un type différent desdits justificatifs d'identité obtenus à l'étape e).

4. Procédé selon une ou plusieurs des revendications précédentes, dans lequel ledit critère de confidentialité dépend d'un ou de plusieurs paramètres compris dans le groupe comportant : une catégorie d'utilisateur, un niveau de protection adopté par ledit appareil de radio-télévision (1) qui est utilisé par l'utilisateur pour réaliser la requête et/ou pour la réponse à ladite requête, un paramètre concernant l'appareil de radio-télévision (1) qui est utilisé par l'utilisateur pour réaliser la requête et/ou pour la réponse à ladite requête, une heure de début de requête Tq, une heure de disponibilité de contenu de radio-télévision Tc, une heure de message Tm, une catégorie du contenu de radio-télévision concordant avec la requête, et un statut d'ouverture de session d'un utilisateur sur ledit appareil de radio-télévision (1) et/ou sur un réseau social accessible par le biais dudit appareil de radio-télévision (1).

5. Procédé selon une ou plusieurs des revendications précédentes, dans lequel ledit critère de confidentialité est associable à un profil utilisateur stocké dans un moyen de mémoire (5) dudit appareil de radio-télévision (1).

6. Procédé selon une ou plusieurs des revendications précédentes, dans lequel ledit critère de confidentialité peut être configuré lors de la réalisation de ladite requête et/ou lors de la configuration dudit profil utilisateur.

7. Procédé selon une ou plusieurs des revendications précédentes, dans lequel lesdits justificatifs d'identité sont une paire de nom d'utilisateur et mot de passe.

8. Procédé selon une ou plusieurs des revendications précédentes, dans lequel lesdits justificatifs d'identité sont des informations de reconnaissance de visage/voix/geste de l'utilisateur.

9. Appareil de radio-télévision (1) pour générer des messages, comprenant des informations concernant des programmes de radio-télévision, en réponse à une requête liée à un programme ou contenu de radio-télévision spécifique (X) réalisée par un utilisateur sur une ou plusieurs bases de données de programme (11) de radio-télévision et/ou sur l'Internet, ledit appareil (1) étant configuré pour mettre en œuvre le procédé selon une ou plusieurs des revendications 1 à 8.

10. Appareil de radio-télévision (1) selon la revendication 9, ledit appareil de radio-télévision (1) comprenant un dispositif de reconnaissance de visage/voix/geste (23) adapté pour reconnaître le visage d'un utilisateur par le biais d'une caméra vidéo, détecter les gestes d'un utilisateur, et reconnaître la voix d'un utilisateur, et capable d'utiliser lesdites informations de reconnaissance de visage/voix/geste de l'utilisateur afin d'exécuter des ordres dans ledit appareil de radio-télévision (1).

11. Système (10) pour générer des messages, comprenant des informations concernant des programmes de radio-télévision, en réponse à une requête liée à un programme ou contenu de radio-télévision spécifique (X) réalisée par un utilisateur sur une ou plusieurs bases de données de programme (11) de radio-télévision et/ou sur l'Internet, ledit système (10) comprenant au moins deux appareils de radio-télévision (1) conformément à la revendication 9 ou 10.

12. Produit d'ordinateur qui peut être chargé dans un moyen de mémoire (5) associable audit appareil de radio-télévision (1), et qui comprend des portions d'un code logiciel adapté pour mettre en œuvre le procédé selon une ou plusieurs des revendications 1 à 8.
